**Europäisches Patentamt**

**European Patent Office**

**Office européen des brevets**

(19)

(11) Veröffentlichungsnummer : **0 346 282 B1**

# (12) EUROPÄISCHE PATENTSCHRIFT

(45) Veröffentlichungstag der Patentschrift :
**27.12.91 Patentblatt 91/52**

(51) Int. Cl.$^5$ : **C02F 11/18,** C02F 3/28

(21) Anmeldenummer : **89810407.0**

(22) Anmeldetag : **31.05.89**

(54) Verfahren zur chargenweisen Hygienisierung von Klärschlamm.

(30) Priorität : **08.06.88 CH 2185/88**

(43) Veröffentlichungstag der Anmeldung :
**13.12.89 Patentblatt 89/50**

(45) Bekanntmachung des Hinweises auf die
Patenterteilung :
**27.12.91 Patentblatt 91/52**

(84) Benannte Vertragsstaaten :
**AT DE ES FR GB IT**

(56) Entgegenhaltungen :
CH-A- 641 747
DE-A- 3 304 365
DE-A- 3 520 458
DE-A- 3 631 545

(73) Patentinhaber : **GEBRÜDER SULZER
AKTIENGESELLSCHAFT
Zürcherstrasse 9
CH-8401 Winterthur (CH)**

(72) Erfinder : **Gros, Henri, Dr.
Geiselweidstrasse 6
CH-8400 Winterthur (CH)**
Erfinder : **Caviezel, Mario
Madlikonerstrasse 522
CH-8425 Oberembrach (CH)**
Erfinder : **Laszlo, Varnagy
Grünweg 13
CH-8400 Winterthur (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur chargenweisen Hygienisierung und Behandlung von Klärschlamm in Taktzeitintervallen, bei welchem Verfahren der durch Wärmetausch mit behandeltem Schlamm in einem zentralen Schlamm/Schlamm-Wärmetauscher in mindestens zwei Stufen vorgewärmte Frischschlamm bei 65-70°C hygienisiert und mindestens einer anaeroben mesophilen Faulung bei etwa 35°C unterworfen wird, wobei die zweitstufige Vorwärmung durch einen phasenverschobenen Austausch der wärmetauschenden Schlämme in dem Wärmetauscher erreicht wird.

Zur Beseitigung pathogener Keime aus dem Rohschlamm wird für kommunalen Klärschlamm eine Hygienisierung behördlich vorgeschrieben, ehe dieser in die Umwelt "entlassen" wird. Für diese Hygienisierung sind eine Minimaldauer und eine Mindesttemperatur vorgeschrieben, die beispielsweise 30 Minuten und mindestens 65°C betragen.

An diese Hygienisierungsbehandlung schliesst sich üblicherweise zur Stabilisierung und Homogenisierung des Schlammes mindestens eine mesophile anaerobe Faulbehandlung an, die bei einer Temperatur von etwa 35°C durchgeführt wird.

Wegen der relativ grossen Temperaturdifferenzen zwischen beiden Behandlungen ist der Energieverbrauch hoch ; man ist daher bemüht, durch Wärmeaustausch zwischen dem hygienisierten Schlamm und dem Roh- oder Frischschlamm einen Teil der Energie, die beispielsweise dem Inhalt eines Hygienisierungsbehälters aus einer externen Wärmequelle zugeführt wird, zurückzugewinnen.

Für eine Wärmerückgewinnung ist daher das eingangs genannte Verfahren bekannt (EP-A-179234). Für eine optimale Wärmerückgewinnung sollte dabei der der Faulung zugeführte Schlamm gerade den Energiebedarf für die Faulstufe decken, ohne dass er gekühlt oder aufgeheizt werden muss. Dabei ist zu beachten, dass der im wesentlichen durch die Temperatur des der Faulung zuzuführenden Schlammes gegebene Energiebedarf für die anaeroben mesophile Faulung während der kalten und während der warmen Jahreszeit unterschiedlich ist. Bei dem bekannten Verfahren wird daher z.B. während der warmen Jahreszeit der der mesophilen Faulung zuzuführende Schlamm nach seinem Wärmetausch mit dem Frischschlamm gekühlt, während während der kalten Jahreszeit gegebenenfalls eine zusätzliche Heizung erforderlich ist. Aufgabe der vorliegenden Erfindung ist es, die Wärmerückgewinnung so durchzuführen, dass dem jahreszeitlich unterschiedlichen Wärmebedarf für die Faulstufe möglichst weitgehend Rechnung getragen wird und eine Kühlung durch ein externes Kühlmittel nicht erforderlich ist. Diese Aufgabe wird mit der Erfindung dadurch gelöst, dass innerhalb eines Taktzeitintervalls, das durch die Dauer der Hygienisierung einer Frischschlammcharge bestimmt ist, unter Einhaltung einer Mindesttaktzeit, die bei Einspeisung vorgewärmten Frischschlammes in die Hygienisierungsstufe beginnt, in dem Wärmetauscher kalter, vorzuwärmender Frischschlamm mindestens einmal ausgetauscht wird, und dass ferner der Zeitpunkt des phasenverschobenen Kaltschlammaustausches relativ zum, durch Einspeisung einer Charge hygienisierten Schlammes in den Wärmetauscher festgelegten Beginn eines Taktzeitintervalls unter Beachtung der Mindesttaktzeit verändert wird.

Ein Austausch von kaltem Frischschlamm während eines Taktzeitintervalls und eine Aenderung des Zeitpunktes des phasenverschobenen Kaltschlammaustausches ermöglichen dem der Faulung zugeführten, hygienisierten und abgekühlten Schlamm eine Temperatur bzw. mit dieser einen Wärmeinhalt "mitzugeben", der auf den jahreszeitlichen Wärmebedarf des Faulung weitgehend abgestimmt ist. Dabei kann die Temperatur dieses abgekühlten Schlammes nach dem Wärmetausch in relativ weiten Grenzen, beispielsweise zwischen 25 und 50°C, schwanken.

Da die Taktzeitintervalle relativ zur notwendigen Mindesthygienisierungszeit gross sind — sie betragen beispielweise das 1,5 — 3-fache der Mindesthygienisierungszeit — und zusätzlich das Chargenvolumen klein gegen das Volumen ist, das insgesamt zu jedem Zeitpunkt hygienisiert wird — das Verhältnis beider zueinander beträgt beispielsweise 1 zu 10 bis 1 zu 30 — werden die geforderten Mindestzeiten für die Hygienisierung auch bei relativ grossen Phasenverschiebungen für den Kaltschlammaustausch gewährleistet. Vorteilhafterweise können dabei das Chargenvolumen und das Volumen der Hygienisierungsbehandlung so aufeinander abgestimmt werden, dass bei Einspeisung einer vorgewärmten Frischschlamm-Charge in die Hygienisierungsbehandlung eine Mindest-Hygienisierungstemperatur nicht unterschritten wird, so dass die Temperaturen in einem Behälter für die Hygienisierung möglichst konstant bleiben und vor allem nicht unter die vorgeschriebene Mindesttemperatur absinken.

Stabilisierung und Homogenisierung des Schlammes lassen sich verbessern, wenn der hygienisierte Schlamm vor der mesophilen einer thermophilen Faulung unterworfen wird ; dabei kann dann der thermophil gefaulte Schlamm als wärmeabgebendes Medium für die Vorwärmung des Frischschlammes herangezogen werden, wobei für die Einhaltung einer festgelegten Einspeisetemperatur des abgekühlten, hygienisierten Schlammes in die thermophile Faulung der Zeitpunkt für einen Austausch des wärmeabgebenden Schlammes im Wärmetauscher innerhalb eines Taktzeitintervalls geändert wird.

Im folgenden wird die Erfindung anhand von Ausführungsbeispielen im Zusammenhang mit der Zeichnung näher erläutert.

Fig. 1    gibt ein Anlagenschema zur Durchführung des neuen Verfahrens wieder, bei dem sowohl eine thermophile als auch eine mesophile Faulung vorgenommen wird ;

Fig. 2    zeigt für ein Taktzeitintervall in einem Temperatur/Zeitdiagramm den Temperaturverlauf für die Schlämme in dem Wärmeaustauscher für eine Hygienisierung und eine direkt daran anschliessende mesophile Faulung ;

Fig. 3    gibt den gleichen Temperaturverlauf für das durch eine thermophile Faulstufe erweiternde Verfahren wieder.

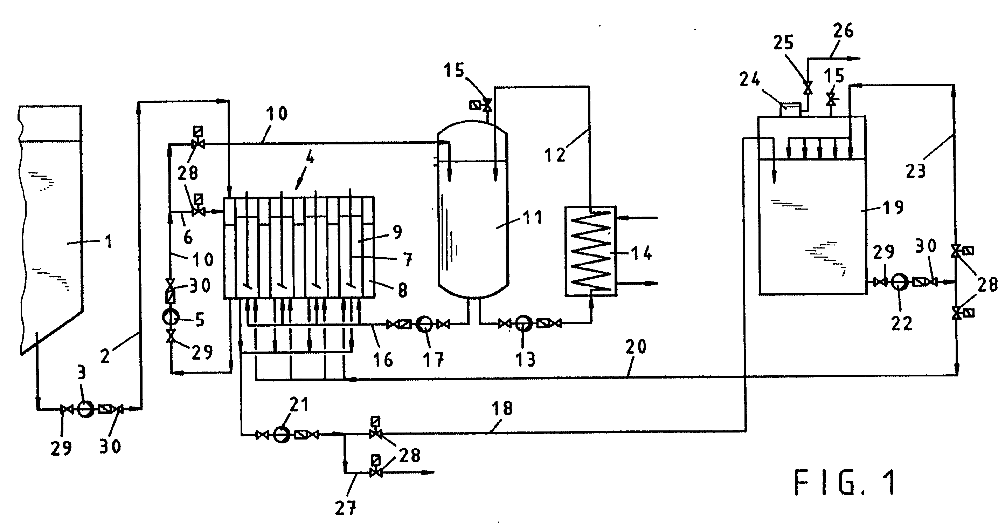

In dem Anlagenschema nach Fig. 1 ist links ein Sammelbehälter 1 für den zu behandelnden Roh- oder Frischschlamm angedeutet. Eine Speiseleitung 2, in der eine Förderpumpe 3 vorgesehen ist, führt vom Behälter 1 zum zentralen Wärmetauscher 4 der Anlage. Der Wärmetauscher 4, dessen bekannter Aufbau beispielsweise in der CH-PS 626984 beschrieben ist, hat einen Hohlraum 8 für den wärmeaufnehmenden Frischschlamm und mehrere Hohlräume 9, in denen Rührwerke 7 vorhanden sind, für wärmeabgebenden Schlamm. Eine weitere Leitung 10, aus der für eine Umwälzung des im Hohlraum 8 vorhandenen Frischschlammes eine Zweigleitung 6 abzweigt, und in der wiederum eine Förderpumpe 5 vorgesehen ist, verbindet den Hohlraum 8 mit einem Hygienisierungsreaktor bzw. -behälter 11. Der Reaktor 11, dessen Volumen ein Vielfaches des Chargenvolumens, also des Volumens des Hohlraumes 8, beträgt, ist über einen Heizkreislauf 12 extern beheizbar. Die Beheizung des Schlammes im Reaktor 11 erfolgt dabei durch Umwälzung eines Teilvolumens mit Hilfe einer Pumpe 13 im Kreislauf 12, in dem als Heizquelle ein, beispielsweise durch Dampf direkt beheizter, Wärmetauscher 14 vorgesehen ist.

Der Heizkreislauf des Hygienisierungsbehälters 11 ist die einzige Fremdwärmequelle der Anlage ; über sie wird der Anlage und damit dem Verfahren — abgesehen von den verschiedenen Pumpen- bzw. Rührleistungen und von der biologischen Reaktionswärme — die gesamte notwendige Energie zugeführt. Diese schwankt jahreszeitlich entsprechend der Temperatur des der Hygienisierung zugeführten vorgewärmten Frischschlammes. Dessen Temperatur wiederum hängt von der Wärmerückgewinnung im Wärmetauscher 4 ab, die sich nach den für die Faulstufen benötigten Eintrittstemperaturen richtet.

Aus dem Gasraum des Reaktors 11 führt ein Ueberdruck-Sicherheitsventil 15 in die umgebende Atmosphäre.

Weiterhin führt eine Leitung 16, in der eine Pumpe 17 vorgesehen ist, aus dem Hygienisierungsbehälter 11 in die Hohlräume 9 des Wärmetauschers 4, an die darüberhinaus über eine Leitung 18 ein weiterer Reaktionsbehälter 19 angeschlossen ist, von dem eine Leitung 20 zurück in die Hohlräume 9 führt. Der Behälter 19 bildet das Behandlungsgefäss für eine thermophile anaerobe Faulungsbehandlung des hygienisierten Schlammes. Den Transport dieses Schlammes aus dem Wärmetauscher 4 in den Behälter 19 und zurück bewerkstelligen Pumpen 21 und 22, von denen die Pumpe 22 gleichzeitig eine Umwälzung des Inhaltes des Behälters 19 über eine Leitung 23 aufrechterhält. Aus dem Gasraum des Behälters 19 führt wiederum ein Sicherheitsventil 15 ins Freie. Weiterhin ist der Behälter 19 oben mit einem Sammelraum 24 für die bei der Faulung erzeugten Biogase ausgestattet, die aus diesem Sammelraum über eine mit einem Absperrorgan 25 versehene Leitung 26 einer weiteren Verwendung zugeführt werden können.

Schliesslich zweigt aus der Leitung 18 auf der Druckseite der Pumpe 21 eine weitere Leitung 27 ab, die zu einem nicht dargestellten Behälter für die mesophile Faulstufe führt. Dieser Behälter hat im Prinzip den gleichen Aufbau wie Behälter 19. In allen Leitungen, die wahlweise beaufschlagt sein können, sind als Steuerorgane für die darin fliessenden Ströme Magnetventile 28 vorgesehen, die ein "Auf/Zu" des Durchflusses durch die entsprechenden Leitungen bewirken. Weiterhin befinden sich saug- und druckseitig jeder Pumpe Absperrorgane 29 und 30, von denen die Organe 30 gleichzeitig als Rückschlagventile ausgebildet sind. Diese Absperrorgane 29 und 30 sind Revisionsabsperrorgane.

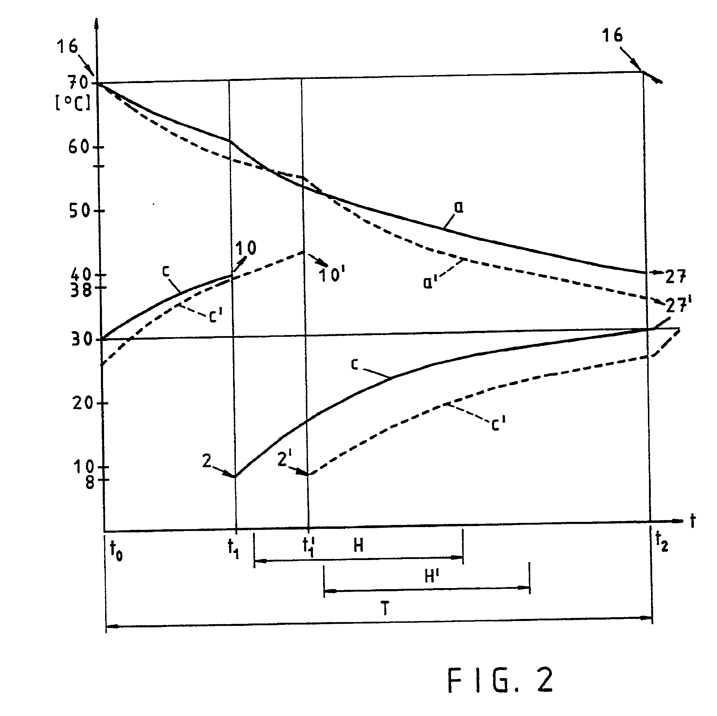

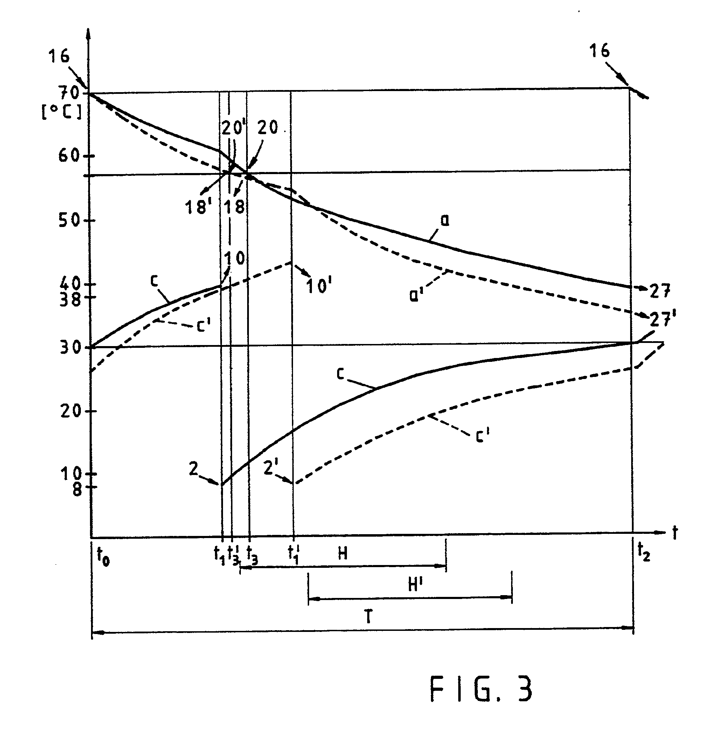

Die Diagramme der Fig. 2 und 3 geben auf der Abszisse die Zeit, beispielsweise in Minuten, und auf der Ordinate Temperaturen in°C wieder. Mit T sind Gesamtlängen eines Taktzeitintervalles bezeichnet. Das Zeitintervall H gibt die für eine Hygienisierung vorgeschriebene Mindestverweilzeit des Schlammes im Reaktor 11 wieder ; in beiden Diagrammen ist dabei eine Taktzeit T angenommen, die etwa das 2- bis 3-fache der Mindesthygienisierungszeit H beträgt.

Die Kurven a und b sowie c zeigen die Temperaturverläufe eines wärmeabgebenden Schlammes (Kurven a und b) im Hohlraum 9 und des wärmeaufnehmenden Frischschlammes (Kurven c). Ein Einspeisen und ein Abziehen einer Charge ist in den Fig. 2 und 3 durch kleine, in die jeweilige Kurve hinein- oder aus ihr herausführenden Pfeile angedeutet, an denen die Bezugsziffern der zugehörigen Leitungen von Fig. 1 angegeben sind.

Ein Taktzeitintervall beginnt zur Zeit to für die in Fig. 2 willkürlich der Zeitpunkt der Einspeisung von aus

3

dem Hygienisierungsreaktor 11 kommendem, heissen Schlamm als wärmeabgebendes Medium in die Hohlräume 9 des Wärmetauschers 4 gewählt worden ist.

Fig. 2 gilt für ein Verfahren, bei dem auf die Hygienisierung direkt die mesophile Faulung erfolgt, d.h. nur eine Faulstufe vorhanden ist. Die jahreszeitlich zu variierende Temperatur ist in diesem Fall die Austrittstemperatur des hygienisierten und abgekühlten Schlammes, der durch die Leitung 27 zur Zeit $t_2$ am Ende des Taktzeitintervalls aus der Anlage wegfliesst. Diese Temperatur kann variiert werden, indem der Zeitpunkt $t_1$, an dem die aufzuwärmende, kalte Frischschlamm-Charge phasenverschoben zur Charge des wärmeabgebenden Schlammes ausgetauscht wird, über einen weiten Bereiches des Taktzeitintervalles T verschoben wird. Dies ist in Fig. 2 für zwei Zeiten $t_1$ und $t_1'$ dargestellt, wobei die zur Zeit $t_1'$ gehörenden Kurven gestrichelt dargestellt und ebenfalls mit " ' " bezeichnet sind.

Selbstverständlich ändern sich bei Verschiebungen des Kaltschlammaustauches die Austrittstemperatur des aufgewärmten, in die Leitung 10 austretenden Frischschlammes. Da dieser jedoch dem unabhängig beheizbaren Hygienisierungsreaktor 11 zufliesst, bewirkt die Aenderung in seiner Temperatur lediglich eine Verstärkung oder Drosselung der im Heiz-Wärmeaustauscher 14 zugeführten Fremdenergie.

Das Schema der Fig. 3 verdeutlicht den Verfahrensablauf bei der in Fig. 1 gezeigten Anlage, bei der der mesophilen Faulung noch eine thermophile Faulung vorgeschaltet ist, die im Reaktor 19 bei etwa 55-56°C durchgeführt wird.

Der innerhalb eines Taktzeitintervalls T gemäss der Erfindung ausgetauschte kalte Frischschlamm (Kurve C) wird in diesem Beispiel sowohl von heissem, hygienisierten Schlamm (Kurve a) als auch von aus der thermophilen Stufe 19 kommenden Faulschlamm (Kurve b) aufgewärmt. Die mit der Erfindung zu beeinflussenden Temperaturen sind diejenigen, mit denen die wärmeabgebenden Schlämme aus dem Wärmetauscher 4 in die thermophile bzw. in die mesophilie Faulstufe 19 bzw. 27 geleitet werden.

Der zu Beginn eines Taktzeitintervalls T der wärmeabgebenden Seite des Wärmetauschers 4 zugeführte hygienisierte Heissschlamm wird daher durch thermophil behandelten Faulschlamm aus dem Reaktor 19 ersetzt, sobald er sich auf die festgelegte Einspeisetemperatur für die thermophile Stufe, im gezeigten Beispiel 57°C, abgekühlt hat. Der Zeitpunkt dieses Austausches ist in Fig. 3 mit $t_3$ bezeichnet.

Die Einspeisetemperatur für die mesophile Faulung 27 am Ende eines Intervalls T zur Zeit $t_2$ wird wie im Beispiel nach Fig. 2 durch Verschiebung des Zeitpunktes $t_1$ variiert, bei dem der kalte Frischschlamm innerhalb eines Taktzeitintervalls T ausgetauscht wird. In Fig. 3 sind die Kurvenverläufe a, b und c wiederum für zwei unterschiedliche Zeitpunkte $t_1$ und $t_1'$ des Kaltschlammaustausches dargetellt ; die zur Zeit $t_1'$ gehörenden Kurven sind gestrichelt eingetragen und mit " ' " bezeichnet.

Auch bei diesem erweiterten Verfahren schwankt die Austrittstemperatur des vorgewärmten Frischschlammes, der dem Hygienisierungsreaktor 11 zugeführt wird (Punkt 10 in Fig. 3) ; diese Schwankung schlägt sich jedoch wiederum nur in Schwankungen der zuzuführenden Fremdenergie (Wärmetauscher 14) nieder.

## Patentansprüche

1. Verfahren zur chargenweisen Hygienisierung und Behandlung von Klärschlamm in Taktzeitintervallen, bei welchem Verfahren der durch Wärmetausch mit behandeltem Schlamm in einem zentralen Schlamm/Schlamm-Wärmetauscher in mindestens zwei Stufen vorgewärmte Frischschlamm bei 65-70°C hygienisiert und mindestens einer anaeroben mesophilen Faulung bei etwa 35°C unterworfen wird, wobei die zweistufige Vorwärmung durch einen phasenverschobenen Austausch der wärmetauschenden Schlämme in dem Wärmetauscher erreicht wird, **dadurch gekennzeichnet, dass** innerhalb eines Taktzeitintervalls (T), das durch die Dauer der Hygienisierung einer Frischschlammcharge bestimmt ist, unter Einhaltung einer Mindesttaktzeit (H), die bei Einspeisung ($t_1$) vorgewärmten Frischschlammes in die Hygienisierungsstufe (11) beginnt, in dem Wärmetauscher (4) kalter, vorzuwärmender Frischschlamm mindestens einmal ausgetauscht wird, **und dass ferner** der Zeitpunkt ($t_1$) des phasenverschobenen Kaltschlammaustausches relativ zum, durch Einspeisung einer Charge hygienisierten Schlammes in den Wärmetauscher (4) festgelegten, Beginn ($t_0$) eines Taktzeitintervalls (T), unter Beachtung der Mindesttaktzeit (H), verändert wird.

2. Verfahren nach Anspruch 1 **dadurch gekennzeichnet, dass** das Chargenvolumen und das Volumen der Hygienisierungsbehandlung (11) so aufeinander abgestimmt werden, dass auch bei Einspeisung einer vorgewärmten Frischschlammcharge in die Hygienisierungsbehandlung (11) eine Mindest-Hygienisierungstemperatur nicht unterschritten wird.

3. Verfahren nach Anspruch 1 oder 2, **dadurch gekennzeichnet, dass** der hygienisierte Schlamm vor der mesophilen einer thermophilen Faulung (19) unterworfen wird.

4. Verfahren nach Anspruch 3, **dadurch gekennzeichnet, dass** der thermophil gefaulte Schlamm als wärmeabgebendes Medium für die Vorwärmung des Frischschlammes herangezogen wird, wobei für die Einhaltung einer festgelegten Einspeisetemperatur des abgekühlten, hygienisierten Schlammes in die thermophile Faulung (19), der Zeitpunkt ($t_3$) für einen Austausch des wärmeabgebenden Schlammes im Wärmetauscher (4) innerhalb eines Taktzeitintervalls (T) geändert wird.

5. Verfahren nach einem der Ansprüche 1 bis 4, **dadurch gekennzeichnet, dass** die Temperatur des der mesophilen Faulung zugeführten, wärmeabgebenden Mediums aus dem Wärmetauscher (4) zwischen 25 und 50°C gehalten wird.

## Claims

1. A process for the batch hygienisation and treatment of clarified sludge in cycle time intervals, in which process the fresh sludge preheated in at least two stages by heat-exchange with treated sludge in a central sludge/sludge heat-exchanger is hygienised at 65-70° and is subjected to at least one anaerobic mesophilic digestion at about 35°C, the two-stage preheating being effected by a phase-shifted exchange of the heat-exchanging sludges in the heat-exchanger, characterised in that cold fresh sludge for pre-heating in the heat-exchanger (4) is exchanged at least once within a cycle time interval (T) determined by the duration of the hygienisation of a fresh sludge batch, a minimum cycle time (H) being observed which starts with the introduction ($t_1$) of pre-heated fresh sludge into the hygienisation stage (11), and also in that the time ($t_1$) of the phase-shifted cold sludge exchange is varied in relation to the strart ($t_0$) of a cycle time interval (T) determined by the introduction of a batch of hygienised sludge into the heat-exchanger (4), the minimum cycle time (H) being observed.

2. A process according to claim 1, characterised in that the batch volume and the volume of the hygienisation treatment (11) are so adapted to one another that the hygienisation temperature does not fall below a minimum value even when a preheated fresh sludge batch is introduced into the hygienisation treatment (11).

3. A process according to claim 1 or 2, characterised in that the hygienised sludge is subjected to a thermophilic digestion (19) before the mesophilic digestion.

4. A process according to claim 3, characterised in that the thermophilically digested sludge is used as a heat-emitting medium for preheating the fresh sludge, while to maintain a fixed temperature for the introduction of the cooled hygienised sludge into the thermophilic digesion (19) the time ($t_3$) for an exchange of the heat-emitting sludge in the heat exchanger (4) is varied within the cycle time interval (T).

5. A process according to any one of claims 1 to 4, characterised in that the temperature of the heat-emitting medium fed from the heat-exchanger (4) to the mesophilic digestion is kept at between 25 and 50°C.

## Revendications

1. Procédé discontinu de désinfection et de traitement de boue d'épuration à allure périodique, procédé suivant lequel la boue fraîche préchauffée en au moins deux étapes par échange de chaleur avec de la boue traitée dans un échangeur de chaleur central boue/boue est désinfectée à 65-70°C et soumise à au moins une digestion mésophile anaérobie à environ 35°C, le préchauffage en deux étapes s'obtenant par remplacement des boues échangeuses de chaleur avec déphasage dans l'échangeur de chaleur, caractérisé en ce que de la boue fraîche froide devant être préchauffée est remplacée au moins une fois dans l'échangeur de chaleur (4) pendant un intervalle de temps (T) correspondant à la durée d'un cycle qui est déterminé par la durée de la désinfection d'une charge de boue fraîche, compte tenu d'une durée minimale de cycle (H) à observer et qui commence avec l'envoi ($t_1$) de la boue fraîche préchauffée à l'étage de désinfection (11), et en ce que, par ailleurs, l'instant ($t_1$) du remplacement de la boue froide avec déphasage par rapport au début ($t_0$) d'un intervalle de temps (T) correspondant à la durée d'un cycle, ce début ($t_0$) étant fixé par l'envoi d'une charge de boue désinfectée dans l'échangeur de chaleur (4), est modifié compte tenu de la durée minimale d'un cycle (H) à observer.

2. Procédé selon la revendication 1, caractérisé en ce que le volume d'une charge et le volume du traitement de désinfection (11) sont coordonnés l'un avec l'autre de manière que la température ne s'abaisse pas au-dessous d'une valeur minimale de désinfection également lors de l'envoi d'une charge de boue fraîche préchauffée au traitement de désinfection (11).

3. Procédé selon la revendication 1 ou 2, caractérisé en ce que la boue désinfectée est soumise à une digestion thermophile (19) avant la digestion mésophile.

4. Procédé selon la revendication 3, caractérisé en ce que la boue ayant subi la digestion thermophile est utilisée en fluide cédant de la chaleur pour le préchauffage de la boue fraîche, l'instant ($t_3$) d'un remplacement de la boue abandonnant sa chaleur dans l'échangeur (4) étant modifié au cours d'un intervalle de temps (T) correspondant à la durée d'un cycle pour conserver une température prédéterminée d'admission de la boue refroidie désinfectée à la digestion thermophile (19).

5. Procédé selon l'une des revendications 1 à 4, caractérisé en ce que la température du fluide abandonnant sa chaleur, sortant de l'échangeur de chaleur (4) et envoyé à la digestion mésophile, est maintenue entre 25 et 50°C.

FIG. 1

EP 0 346 282 B1

FIG. 2

FIG. 3